Europäisches Patentamt

(19) European Patent Office

Office européen des brevets

(11) Numéro de publication: **0 034 972**
**A1**

## (12) DEMANDE DE BREVET EUROPEEN

(21) Numéro de dépôt: **81400227.5**

(22) Date de dépôt: **13.02.81**

(51) Int. Cl.³: **C 09 D 11/00**
**C 09 D 11/02**

(30) Priorité: **15.02.80 FR 8003411**

(43) Date de publication de la demande:
**02.09.81 Bulletin 81/35**

(84) Etats contractants désignés:
**DE GB IT NL SE**

(71) Demandeur: **HOTCHKISS-BRANDT SOGEME H.B.S.**
**186 rue du Faubourg St Honoré**
**F-75008 Paris(FR)**

(72) Inventeur: **Le Pesant, Jean-Pierre**
**THOMSON-CSF SCPI 173, bld Haussmann**
**F-75360 Paris Cedex 08(FR)**

(72) Inventeur: **Tantot, Georges**
**THOMSON-CSF SCPI 173, bld Haussmann**
**F-75360 Paris Cedex 08(FR)**

(74) Mandataire: **Dubreuil, Annie**
**"THOMSON-CSF" - SCPI 173, bld Haussmann**
**F-75360 Paris Cedex 08(FR)**

(54) Liquide d'impression destiné notamment à l'impression par jet d'encre.

(57) L'invention concerne un liquide d'impression destiné à
l'impression, notamment à l'impression par jet d'encre.

La phase solvante portant le colorant et les autres composants est constituée par un mélange azéotropique, à savoir
un mélange de deux ou plusieurs composés qui distillent à
température et composition fixes, sous une pression donnée.

L'invention s'applique notamment à la technique du jet
d'encre.

1

# LIQUIDE D'IMPRESSION DESTINE NOTAMMENT A L'IMPRESSION PAR JET D'ENCRE

L'invention concerne un liquide d'impression destiné notamment à l'impression par jet d'encre. Dans cette technique une partie seulement du liquide traversant les moyens d'impression est utilisée pour être déposée sur un substrat, l'autre partie du liquide ayant traversé ces moyens d'impression, étant récupérée pour être utilisée de nouveau.

Lors d'une telle circulation et récupération, le liquide est soumis à évaporation et c'est le cas en particulier de ses composants les plus volatils. Ceci se produit de façon générale, mais plus particulièrement dans la technique d'impression, par jet d'encre dans laquelle le liquide émis par les moyens d'impression est fractionné en gouttelettes de très faibles dimensions, ce qui a pour résultat d'augmenter considérablement la surface de ce liquide exposée à l'évaporation. C'est ce qui se produit dans la technique de jet d'encre dite à "jet continu", dans laquelle le liquide sort sous pression d'un ajutage et est fractionné par des moyens d'excitation. Dans cette technique particulière, des gouttelettes sont formées en permanence, à des fréquences qui peuvent être supérieures à 100 kilohertz. Cependant, une faible fraction, qui peut être de l'ordre de 5 %, au moins, de ces gouttelettes, est utilisée pour l'impression. Les gouttelettes non utilisées pour l'impression sont interceptées et éloignées du substrat à imprimer.

De façon générale, afin de limiter les besoins en approvisionnement de la machine d'impression et les coûts de cet approvisionnement, il est souvent avantageux de pouvoir récupérer le liquide d'impression en vue d'une utilisation répétée. Ceci est particulièrement le cas lorsque la fraction utilisée à chaque cycle de circulation de liquide est faible. On se heurte alors à des difficultés d'utilisation liées à l'évolution des propriétés du liquide d'impression due à l'évaporation. Ceci est en particulier le cas dans la technique d'impression par jet d'encre qui nécessite un contrôle très précis de la formation des gouttelettes et de leur trajectoire.

Dans le but d'éviter cet inconvénient, il est avantageux de connaître la composition des volumes évaporés lors du cycle de circulation du liquide d'impression. Ceci peut permettre notamment de faire évoluer commodément le réglage de la machine d'impression et/ou de régénérer le liquide d'impression par des adjonctions périodiques d'un ou plusieurs liquides de complément. Une disposition particulièrement intéressante est celle dans laquelle la régénération du liquide d'impression est contrôlée automatiquement par la machine d'impression, sans intervention d'un opérateur. Cette opération de régénération automatique est particulièrement simple quand la composition du liquide évaporé reste fixe.

Il est connu d'utiliser les mélanges azéotropes dans le domaine des encres ou des peintures. Ces mélanges sont employés de façon usuelle dans la prévision des phénomènes prenant place lors du séchage de feuil. Des azéotropes du nitropropane ont également été proposés pour éviter, dans certains cas, le recours aux hydrocarbures benzéniques et les remplacer par un mélange de propriétés solvantes analogues.

La présente invention concerne une autre application des azéotropes, à savoir celle de permettre de résoudre le problème de recyclage de l'encre utilisée dans les techniques d'impression. Un des problèmes en effet, que soulève l'utilisation des encres pour impression est celui du recyclage partiel ou de la récupération de l'encre et/ou la régénération de celle-ci à une concentration optimale des divers constituants. Dans ce but il convient plus particulièrement de pouvoir contrôler en permanence les teneurs des composants du mélange solvant, ce qui présente souvent avec les liquides connus actuellement de grandes difficultés.

La présente invention a pour objet de résoudre ce problème, et concerne un liquide d'impression notamment utilisé dans la technique d'impression par jet d'encre dont les pertes en mélange solvant ont une composition fixe et bien déterminée, et comportant un mélange solvant volatil et des composés dissous et/ou en dispersion. Elle concerne plus particulièrement un liquide d'impression destiné aux procédés d'impression faisant appel à un recyclage partiel ou une récupération de l'encre et/ou à la régénération de celle-ci, caractérisé en ce que la partie volatile de l'encre est constituée par un mélange azéotropique de solvants, ou ne s'en écartant pas de façon significative, soit environ de plus de 5 % en poids.

L'invention sera mieux comprise à l'aide des explications qui vont suivre.

Les composés dissous et/ou dispersés peuvent avantageusement être additionnés d'un ou plusieurs liquides peu volatils dans les conditions ordinaires de travail, et possédant diverses propriétés favorables. On peut citer de façon nullement limitative une amélioration du pouvoir solvant, ou la fonction antibouchage. Dans ce dernier cas l'emploi d'un composé peu volatil permet d'éviter après évaporation de la fraction plus volatile la formation de croûtes difficilement solubles.

On utilise de façon préférentielle des alcools ou polyalcools aliphatiques avec ou sans fonction éther. A titre d'exemple non limitatif, on peut faire appel à l'éthylène-glycol, au glycérol ou à l'éthyldiglycol.

Le liquide d'impression faisant l'objet de l'invention est caractérisé en ce que la fraction solvante et volatile est constituée par un mélange azéotropique.

Le solvant ou dispersant utilisé pour la fabrication d'un liquide d'impression conforme à l'invention est choisi dans la catégorie des mélanges de solvants formant un azéotrope, c'est-à-dire un mélange de deux ou plusieurs composés qui distille à température et composition toutes deux fixes sous une pression donnée.

On appelle dans la suite de la description "mélange azéotropique" l'azéotrope lui-même, ou tout mélange dont les proportions ne s'en écartent pas de manière significative, par exmple, pas plus de 5 % en poids d'un ou plusieurs des constituants. Ces mélanges azéotropiques sont choisis parmi des mélanges azéotropiques connus

4

en eux-mêmes, mais appliqués conformément à l'invention comme solvant et/ou milieu dispersant pour les différentes matières de façon non limitative à l'impression par jet d'encre.

Les mélanges azéotropiques utilisés sont constitués de deux ou plusieurs composés organiques, et éventuellement d'eau. Les composés organiques utiles pour les liquides d'impression sont les alcools aliphatiques, les éthers aliphatiques, les esters aliphatiques et les cétones aliphatiques. De préférence, sont utilisés les composés légers, de volatilité suffisante, et dont la masse moléculaire est inférieure à 150.

Le tableau 1, ci-dessous donne deux exemples, nullement limitatifs, de tels azéotropes.

## TABLEAU 1

|  |  | Concentration (% en poids) | Température d'ébullition (°C) | Température d'ébullition de l'azéotrope (°C) |
|---|---|---|---|---|
| Mélange azéotropique A | Ethanol | 39 | 78,3 | 74,0 |
|  | Butanone -2 | 61 | 79,6 |  |
| Mélange azéotropique B | Ethanol | 51 | 78,3 | 76,7 |
|  | Acétate d'isopropyle | 49 | 91,0 |  |

Le mélange azéotropique est préparé par simple mélange des constituants dans les proportions voulues, ou ne s'en éloignant pas de façon significative, par exemple pas de plus de 5 % en poids. Dans des cas plus critiques, il peut être obtenu selon un procédé connu en soi de distillation et fractionnement.

5

Lorsque le mélange constituant l'encre est soumis à une évaporation, le mélange de solvants constituant l'azéotrope est généralement beaucoup plus volatil que les autres matières entrant dans la composition de l'encre. Le mélange azéotropique s'évapore avec une composition fixe, et seule varie la concentration dans l'encre des autres matières se présentant en solution ou en suspension. Dans le cas d'un recyclage ou d'une récupération de l'encre, la régénération de celle-ci à une concentration optimale des divers constituants est facilitée par le fait que les pertes en solvant dues à l'évaporation ont une composition fixe et bien déterminée pour une pression donnée (par exemple la pression atmosphérique). Par conséquent, la connaissance du volume évaporé suffit alors à déterminer l'ajustement à effectuer sans qu'il soit nécessaire de contrôler constamment les teneurs des composants du solvant volatil.

L'emploi d'un azéotrope permet dans un mélange de solvants volatils de maintenir constante la concentration relative d'un solvant qui serait particulièrement critique pour différentes raisons. Par ailleurs, le mélange azéotropique est le plus fréquemment "à minimum" c'est-à-dire que la température d'ébullition de l'azéotrope est inférieure à celle des corps purs qui le constituent. Cette augmentation de la volatilité facilite le séchage de l'encre sur le papier.

L'invention s'applique à la fabrication des liquides d'impression, notamment destinés à l'impression par jet d'encre.

Le tableau II ci-dessous donne de façon nullement limitative deux exemples de tels liquides d'impression, contenant outre le mélange azéotropique divers composés dissous et/ou en suspension. Ces matériaux coopérant entre eux pour conférer au liquide d'impression les propriétés recherchées, notamment de viscosité, conductivité et tension superficielle.

6

## TABLEAU II

|  |  | Parties en poids |
|---|---|---|
| Exemple I | Mélange Azéotropique A | 87,8 |
|  | Gomme - laque décirée blanchie | 8,5 |
|  | Bleu Victoria | 1,2 |
|  | Chlorhydrate de diméthylamine | 2,5 |
| Exemple II | Mélange Azéotropique B | 81,2 |
|  | Gomme - laque décirée blanchie | 5,5 |
|  | Bleu Victoria | 1,3 |
|  | Chlorhydrate de diméthylamine | 3,0 |
|  | Ethylène glycol | 9,0 |

En se référant à la définition du mélange azéotropique donnée précédemment on admet qu'une variation relative inférieure à 5 % en poids n'est pas significative d'un changement de composition de l'azéotrope. Dans le mélange B la teneur en éthanol peut donc varier entre 48,5 et 53,5 %.

La masse partielle (par rapport à la masse totale) des composants du liquide d'impression autres que le mélange azéotropique est définie à 10 % près sans que cela n'altère les propriétés recherchées, par exemple de viscosité ou de conductivité électrique.

Dans l'exemple II la teneur en éthylène-glycol est donc susceptible de varier entre 8 et 10 %.

Dans une des applications les plus importantes d'un liquide d'impression conforme à l'invention ce liquide est une encre destinée à être utilisée dans les imprimantes à jet d'encre.

## REVENDICATIONS

1. Liquide d'impression destiné aux procédés d'impression faisant appel à un recyclage partiel ou une récupération de l'encre et/ou à la régénération de celle-ci, caractérisé en ce que la partie volatile du liquide est constituée par un mélange azéotropique de solvants, ou ne s'en écartant pas de façon significative, soit environ de plus de 5 % en poids.

2. Liquide d'impression selon la revendication 1, caractérisé en ce que le mélange azéotropique est additionné d'un ou plusieurs liquides peu volatils dans les conditions normales de fonctionnement destinés à conférer au liquide des propriétés particulières.

3. Liquide d'impression selon la revendication 1, caractérisé en ce que le mélange azéotropique est additionné d'un ou plusieurs solvants peu volatils dans les conditions normales de fonctionnement.

4. Liquide d'impression selon la revendication 1, caractérisé en ce que le mélange azéotropique est constitué de deux ou plusieurs composés organiques pris parmi les alcools aliphatiques, les éthers et esters aliphatiques, les cétones aliphatiques, de masse moléculaire inférieure à 150.

5. Liquide d'impression selon la revendication 3, caractérisé en ce que le ou les solvants additionnels sont pris parmi les alcools aliphatiques, les polyalcools aliphatiques, les alcools ou polyalcools aliphatiques possédant également des fonctions éthers.

6. Liquide d'impression selon la revendication 1, caractérisé par une composition nominale en poids de 80 à 96 parties de mélange azéotropique éthanol-butanone contenant 37 à 41 % d'éthanol, 7 à 9 parties de gomme - laque décirée blanchie, 1 à 1,5 partie de bleu Victoria et 2 à 3 parties de chlorhydrate de diméthylamine.

7. Liquide d'impression selon la revendication 1, caractérisé en ce qu'il contient en poids 73 à 89 parts de mélange azéotropique éthanol/acétate d'isopropyle contenant 49,5 à 53,5 % d'éthanol, 5 à 6

8

parts de gomme - laque décirée blanchie, 1 à 1,5 part de bleu Victoria, 2,5 à 3,5 parts de chlorhydrate de diméthylamine et 8 à 10 parts d'éthylène-glycol.

8. Liquide d'impression selon l'une des revendications précédentes, caractérisé en ce qu'il constitue une encre destinée à l'impression par jet d'encre.

**0034972**

Office européen
des brevets

**RAPPORT DE RECHERCHE EUROPEENNE**

Numéro de la demande

EP 81 40 0227

| | **DOCUMENTS CONSIDERES COMME PERTINENTS** | | | CLASSEMENT DE LA DEMANDE (Int. Cl.³) |
|---|---|---|---|---|
| Catégorie | Citation du document avec indication, en cas de besoin, des parties pertinentes | Revendication concernée | | |
| A | GB - A - 2 004 904 (M & T CHEM)  * Revendications 1 et 2 * | 1 | | C 09 D 11/00  11/02 |
| A | DE - A - 2 647 678 (AMERICAN CAN)  * Revendication 1 * | 1 | | |

**DOMAINES TECHNIQUES RECHERCHES (Int. Cl.³)**

C 09 D 11/00
                11/02

**CATEGORIE DES DOCUMENTS CITES**

X: particulièrement pertinent
A: arrière-plan technologique
O: divulgation non-écrite
P: document intercalaire
T: théorie ou principe à la base
   de l'invention
E: demande faisant interférence
D: document cité dans
   la demande
L: document cité pour d'autres
   raisons

&: membre de la même famille,
   document correspondant

Le présent rapport de recherche a été établi pour toutes les revendications

| Lieu de la recherche | Date d'achèvement de la recherche | Examinateur |
|---|---|---|
| La Haye | 15-05-1981 | DE ROECK |

OEB Form 1503.1  06.78